Europäisches Patentamt

European Patent Office

Office européen des brevets

(19)

(11) Publication number: **0 527 286 A1**

## EUROPEAN PATENT APPLICATION

(12)

(21) Application number: **92102196.0**

(22) Date of filing: **10.02.92**

(51) Int. Cl.⁵: **C10M 107/50**, C10M 111/04, C10M 173/02

(30) Priority: **13.08.91 JP 228900/91**
**29.11.91 JP 341945/91**

(43) Date of publication of application:
**17.02.93 Bulletin 93/07**

(84) Designated Contracting States:
**DE ES FR GB IT NL**

(71) Applicant: **GOYO PAPER WORKING CO. LTD.**
**13-18, Anryu 4-chome, Suminoe-ku**
**Osaka-shi, Osaka-fu 559(JP)**

(72) Inventor: **Ohara, Shuzo, c/o GOYO PAPER**
**WORKING CO., LTD.**
**13-18, Anryu 4-chome, Suminoe-ku**
**Osaka-shi(JP)**
Inventor: **Kitamura, Ryoichi, c/o GOYO PAPER**
**WORKING CO., LTD**
**13-18, Anryu 4-chome, Suminoe-ku**
**Osaka-shi(JP)**
Inventor: **Ando, Tsuneo, c/o GOYO PAPER**
**WORKING CO., LTD.**
**13-18, Anryu 4-chome, Suminoe-ku**
**Osaka-shi(JP)**
Inventor: **Yasumoto, Taizo, c/o GOYO PAPER**
**WORKING CO., LTD.**
**13-18, Anryu 4-chome, Suminoe-ku**
**Osaka-shi(JP)**

(74) Representative: **Vossius & Partner**
**Siebertstrasse 4 P.O. Box 86 07 67**
**W-8000 München 86 (DE)**

(54) Lubricant.

(57) The present invention provides a lubricant containing a solid type modified silicone compound which is obtained by reacting an organic silicone compound having a molecular weight of not less than 12000 and having at least one hydrogen group with a hydrocarbon compound having a carbon number of not less than 24 and having at least one double bond which reacts with the hydrogen, group.

The lubricant of the present invention is excellent in lubrication property, water repellency, waterproof property, releasing property, softening property, antistaining property, oil repellency and oil resistance. Moreover, it realizes an optimum composition of the lubricant because of good compatibility with wax.

EP 0 527 286 A1

The present invention relates to a lubricant containing a solid type modified silicone compound, which can impart excellent lubricity, water repellency, waterproof property, polishing property, softening property, antistaining property, and favorable durability thereof, and which can improve wax by easy mixing as it has good compatibility with natural wax and Synthetic wax.

Conventionally, wax type and silicone type lubricants are known which give such librication function. On the other hand, to utilize each advantage of the wax type and the silicone type lubricants, the usage by mixing these is tried. However, compatibility is poor with each other, so that this mixture has disadvantage of extreme lowering of function as compared to the single usage.

An object of the present invention is to provide a lubricant containing a solid type modified silicone compound which has good compatibility with wax.

The other objects and advantages of the present invention will be apparent from the following detailed description of the invention.

The present invention encompasses a lubricant containing a solid type modified silicone compound, which is obtained from reacting an organic silicone compound having a molecular weight of not less than 12000, and having at least one hydrogen group, with a hydrocarbon compound having a carbon number of not less than 24, and having at least one double bond which reacts with the hydrogen group.

The solid type mentioned herein includes, besides a solid type, a paste type and a cream type.

As the silicone compound having at least one hydrogen group, there are included e.g. polymethyl hydrogen siloxane and methylhydrogen siloxane-dimethyl siloxane copolymer. As the silicone compound, one having a molecular weight of not less than 12000, preferably 12000 - 60000 is used. And, as the hydrocarbon compound having at least one double bond and a carbon number of not less than 24, there are included e.g. α-olefin polyethylene wax, polybutene and mixtures thereof. When a hydrocarbon compound having a carbon number of less than 24 is used, the obtained reaction product has poor compatibility with wax. From this aspect, the hydrocarbon compound having a carbon number of not less than 24, Preferably 24 - 60 is used.

A synthesis example of the modified silicone compound is shown below. A polymethyl hydrogen siloxane (including methyl hydrogen siloxane-dimethyl siloxane copolymer) and an α-olefin having one double bond at its terminal are mixed; chloroplatinic acid is added as a catalyser and they are heated to conduct addition reaction.

In this reaction, the α-olefin is added to the hydrogen group which the methyl hydrogen siloxane has, but it is difficult to add it to all of the hydrogen groups. Therefore, when more excellent thermal stability is demanded, it is possible that, after adding the α-olefin at its maximum, the hydrogen groups are blocked by adding propylene to remaining hydrogen groups. In either case, the obtained reaction product is washed several times with acetone for purification.

The solid type modified silicone compound used in the present invention is prepared through the addition reaction of a hydrocarbon compound having a carbon number of not less than 24 and at least one double bond with an organic silicon compound having a molecular weight of not less than 12000 and having at least one hydrogen group, and thus, the resulting reaction product is solid. In addition, it has a feature of being good in compatibility with wax, which is different from ordinary silicone oils. Therefore, by mixing it with wax, properties possessed by the both wax and silicone compound, that is, lubrication property, water repellency, waterproof property, softening property, antistaining property and polishing effect are exhibited.

The solid type modified silicone compound used in the present invention is used singly or by mixing with wax. They are used in a solvent system or in an emulsion system, but, as the modified silicone compound is solid in itself, the performance is enough exhibited as a solid type, too.

In the solid type lubricant, there are no problems on safety or sanitation of solvents which the solvent system has, or on obstruction materials such as emulsifying agents and dispersing agents in the emulsion system, and, besides, direct treatment only on a surface layer of the treatment surface is possible, and thus, there are no adverse effects on the inside of the treatment body. In addition, the solid type is simple in handling. Especially, in a case of using it as a surface treatment agent to leather products, there are troublesome problems, in a case of a customary liquid treatment agent, of generation of stains and spew on the leather surface, but, in a case of solid treatment agent, there are absolutely no problems and the treatment is made only on the surface layer, resulting in obtaining slicky and good feeling finish. Especially, there is an eminent effect of an increase in softening property. It is effective not only for natural leather products, but also for artificial leather products.

In addition, the solid lubricant of the present invention is widely used e.g. for car wax, steel furniture and floor polishing and ski wax. Moreover, it is added to urethane paints and lacquers to give lubrication property thereto. Besides, it is effective for giving mold release property to a metallic mold and die, or giving release property upon production of a division fiber by adding it to polyethylene. Furthermore, it is used for high speed flying objects such as a golf ball and for golf club face so as to reduce friction coefficient thereof.

In addition, it is also possible, if necessary, to add organic and inorganic materials such as resins (natural, synthetic and semi-synthetic), fats and oils, pigments, perfumes, a small quantity of solvents, clay minerals such as silica and clay and metallic particles of e.g. aluminum and gallium.

When the solid lubricant is used by mixing with wax, though depending on the usage purpose, enough lubrication function is exhibited, when the mixing quantity of 0.5 - 80 % by weight to the wax is used.

It is also used, singly or by mixing with wax, as a Polishing agent, softening agent and feeling modifier for natural or synthetic leather products such as shoes, bags and outer garments and/or as an impregnation agent of chemical dustcloth used for e.g. cleaning furniture in the solvent or emulsion system.

In a case of using it by directly applying it to a treatment surface, singly, in the solvent system or in the emulsion system, a favorable lubrication function can be given at about 0.5 - 7 $g/m^2$ in a case of a silicone content of, for example, 40 - 60 %, though depending on surface conditions of the treatment surface or a silicone content of the solid type modified silicone compound.

In a case of improving surfaces of natural rubbers, natural resins or synthetic resins, 1 - 8 % by weight is added thereto.

In a case of the solvent system, it is preferred to use e.g.toluene, xylene, 1, 1, 1-trichloroethane, mineral spirit as a solvent since it shows moderate solubility therefor.

In a case of the emulsion system, though an emulsification method is not specially limited, there are exemplified the following methods;

(1) Emulsification is made by mixing a melt modified silicone compound and an emulsifying agent and stirring the mixture while adding heated water little by little.

(2) Emulsfication is made by melting a modified silicone compound and an emulsifiying agent and adding the mixture to boiling water to be stirred.

(3) A method in which a modified silicone compound is pulverized into fine particles in water by, using mechanical force. Among them, the method (1) is the most fovorable because emulsified particles are very small. In the case of the method (2), particle size distribution is broader compared to the method (1), and the method (3) is simple and cheap in cost, but the particle size is limited to about 1 - 3$\mu$m and it is impossible to make finer particles.

As the emulsifying agent, known ones such as sorbitane monostearate, polyoxyethylene stearylether and stearic acid morpholine salt are used.

The modified silicone emulsion obtained as above can be applied to all surfaces and spots which require lubrication property, water repellency, waterproof property, releasing property, softening property, antistaining property, oil repellency and oil resistance and to which said emulsion is applicable.

For example, in a case of giving lubrication property, water repellency, waterproof property, releasing property, softening property, antistaining property, oil repellency and oil resistance to a paper base material by using an emulsion composed only of the modified silicone compound, a coating amount is preferably in a range of 0.5 - 5 g (solid)/$m^2$, more preferably 1 - 3 $g/m^2$ in a case of a silicone content of 45 %, though depending on the silicone content in the modified silicone compound, emulsifying agents used, paper nature of the paper base material used or a degree of performance required.

Moreover, defects of the paraffin type wax can be eliminated by the conjoint use of she modified silicone compound and the paraffin type wax. As there is compatibility between the solid type modified silicone compound and the paraffin type wax, adjustment is made with the desired mixing ratio depending on required performance.

Furthermore, in a case of conjointly using a film forming polymer which has compatibility with the solid type modified silicone compound, anti-moisture performance and film forming property, a surface layer comprising a tough continuous film and having high anti-moisture property, water repellency, waterproof property, releasing property, antistaining property, oil repellency, oil resistance and lubrication property can be obtained.

As the film forming polymer, olefin type resins and acrylic type resins are preferable, and a quantity used is preferable in a range of about 10 - 70 % by weight as a solid content. Especially, an emulsion composed of an acrylic type resin, a modified silicone compound and a paraffin type wax gives a film with high water repellency, waterproof property and anti-moisture property, and expecially gives excellent anti-moisture property, which cannot be obtained by that composed of the acrylic type resin and paraffin type wax. In addition, this film is mechanically made to be fine in water, and therefore, when applied to a paper base material, a waterproof and antimoisture paper which is reproducible can be provided. Though the mixing ratio is not especially limited, 1 - 10 % by weight of a modified silicone compound, 20 - 30 % by weight of a paraffin wax, 10 - 70 % by weight of an acrylic type resin and 1 - 10 % by weight of an emulsifying agent in terms of solid content, respectively (100 weight % in total) are preferable.

Hereinafter, the present invention will be explained in more detail based on examples and comparison examples, but the present invention is not limited thereby.

In the following description, "part" and "%" mean "part by weight" and "% by weight", unless otherwise indicated.

## Example 1

56 parts of a methylhydrogen siloxane-dimethylsiloxane copolymer (P = 450, MW = 33000), 44 parts of an $\alpha$-olefin ("Dialen-30" manufactured by Mitsubishi Kasei Co., Ltd., carbon number: 28 - 52 (mainly of 30 - 36)), 3 parts of a 0.1 % $H_2PtCl_6.6H_2O$ isopropylalcohol solution were put into a reactor, subjected to addition reaction for 5 hours at 80 °C and the reaction being continued reacted for 5 hours at 120 °C. When a viscosity of a reaction product reached about 10000 cps, the reaction was stopped. The obtained reaction product was washed 3 times with acetone for purification and dried. The obtained modified silicone compound was 56 % in a silicone content and of milky white solid.

8 % of the modified silicone compound thus obtained, 45 % of carnauba wax (manufactured by K.K. Katoh Yokoh), 45 % of paraffin wax "140" (manufactured by Nippon Seiro K.K.), 2 % of aluminum powder were melted and/or mixed at 105 °C, then mixed with 0.2 % of an ultraviolet ray absorbent "Tinuvin P" (manufactured by Chiba Geigy Co., Ltd.) and put into a mold, cooled and solidified to make a solid car wax.

This car wax was good in compatibility. This wax was applied to a car body, made to be uniform thin film with towel, and the operability and luster were evaluated. The results were shown in Table 1.

## Comparison Example 1

A solid type car wax was made in the same manner as in Example 1, except in that 8 % of silicone oil "KF-96" (1000 cps, manufactured by Shin-Etsu Chemical Industries, Ltd.) were used instead of the modified silicone compound. This was insufficient in compatibility.

The evaluation of this wax was made as in Example 1, and the results were shown in Table 1.

Table 1

| | (1)Operability (Lubrication Property) | (2) Luster | (3) Water repellency | (4) Compatibility with wax |
|---|---|---|---|---|
| Example 1 | ◎ | ◎ | ◎ | ◎ |
| Comparison Example 1 | × | ◎ | △ | × |

(1) Operability

After applying the wax to a car body, the wipe-off easiness upon wiping coated surface with towel was observed.

(2) Luster

In the above item (1), the surface luster after wipe-off was observed with eyes.

(3) Water repellency

In the above item (1), the predetermined quantity of waterdrop was dropped to the surface after wipe-off, and the conditions upon the repelling were observed.

(4) Comparatibility to wax

Conditions upon melting and mixing were observed. In the above items (1) - (4), the evaluation was made according to the following four ranks;

◎ : Extremely excellent (Waterdrop is markedly repelled.)

○ : Excellent (Waterdrop is well repelled.)

△ : A little bad (Waterdrop widens a little.)

× : Bad (Waterdrop widens.)

Example 2

15 % of the modified silicone compound obtained in Example 1, 35 % of carnauba wax, 10 % of ozokerite (manufactured by K.K. Katoh Yokoh), 15 % of montan wax (manufactured by K.K. Katoh Yokoh), 5 % of sericin wax (manufactured by K.K. Katoh Yokoh), 15 % of beef tallow (manufactured by Yoshikawa Seiyu K.K.) and 5 % of mineral spirit were melted and mixed, then cooled to make a leather treatment agent.

This treatment agent was applied to a cow leather commercially available to evaluate waterproof property, surface conditions and luster. The results were shown in Table 2.

Comparison Example 2

A leather treatment agent was made in the same manner as in Example 2, except that 15 % of silicone oil "KF-96" (500 cps, manufactured by Shin-Etsu Chemical Industries, Ltd.) instead of the modified silicone compound.

The evaluation of this product was made as in Example 2, and the results were shown in Table 2.

Table 2

|  | (1)Waterproof Property | (2)Surface Conditions | (3)Luster |
|---|---|---|---|
| Example 2 | ◎ | Whitening not Observed | ◎ |
| Comparison Example 2 | × | Whitening Observed | ○ |

(1),(2) Waterproof property and surface conditions
After dropping the predetermined quantity of water to the cow leather treated with this product and leaving it as it was for 24 hours, waterproof property, whitening conditions of the surface and the existence of stains were observed.
◎ : Extremely good
X : Bad
(3) Luster
Luster of the surface after evaluating waterproof property was observed with eyes.
◎ : Extremely good
○ : Good

Example 3

53.2 parts of a methylhydrogen siloxane-dimethylsiloxane copolymer (P = 300, MW = 22000), 46.8 parts of an $\alpha$-olefin ("Dialen-30" manufactured by Mitsubishi Kasei Co., Ltd., carbon number: 28 - 52 (mainly of 30 - 36)), 8 parts of a 0.1 % $H_2PtCl_6.6H_2O$ isopropyl alcohol solution were put into a reactor, addition reacted for 9 hours at 120 °C and further reacted for 18 hours at 130°C . When a viscosity of a reaction product reached about 10000 cps, the reaction was stopped. The reaction product was washed 3 times with acetone for purification and dried. The obtained modified silicone compound was 53.2 % in silicone content, 32000 in molecular weight and of milky white solid.

The obtained modified silicone compound was dissolved into 1,1,1-trichloroethane at a concentration of 5 %, and it was called (A).

The obtained modified silicone compound and "Paraffin wax 140" (manufactured by Nippon Seiro K.K.) were mixed at a weight ratio of 1:1 and they were dissolved into 1,1,1-trichloroethane at a concentration of 5 %, and it was called (B).

The obtainted solution products (A) and (B) were applied on a felt-side surface of high quality paper (120 g/m$^2$), in a quantity of 1.5 g/m$^2$ (as solid), respectively. On the application products, static friction coefficient and dynamic friction coefficient between the application surfaces were measured. The results are shown in Table 3. As clear from the Table 3, in the both cases of the modified silicone compound alone and the one blended with wax, an excellent lubrication function giving effect was exhibited.

Comparison Example 3

The same paraffin wax as used in Example 3 was dissolved into 1,1,1-trichloroethane at a concentration of 5 %, and it was called (C).

The silicone oil "KF96-1000CS" as used in Comparison Example 1 was dissolved into 1,1,1-trichloroethane at a concentration of 5 %, and it was called (D).

The obtainted solution products (C) and (D) were applied on high quality paper in a quantity of 1.5 g/m$^2$(as solid), respectively, as in Example 3, and static friction coeffeicient and dynamic friction coefficient between the application surfaces were measured as in Example 3. The results arc shown in Table 1.

Comparison Example 4

51.9 parts of methylhydrogen siloxane-dimethylsiloxane silicone copolymer used in Example 3, 48.1 parts of an $\alpha$-olefin hexadecene-1, 8 parts of a 0.1 % $H_2PtCl_6.6H_2O$ isopropyl alcohol solution were put into a reactor, and subjected to addition reaction for 9 hours at 120 °C. When a viscosity of a reaction product reached about 5000 cps, the reaction was stopped. The obtained modified silicone compound was liquid and 48.3 % in a silicone content, 27000 in molecular weight.

The obtained modified silicone compound was dissolved into 1,1,1-trichloroethane at a concentration of 5 % as in Example 3, and it was called (E). In addition, as in Example 3, the solution (E) was applied on high quality paper and static friction coefficient and dynamic friction coefficient between the application surfaces were measured. The results are shown in Table 3.

The obtained modified silicone (E) is, like silicone oil (D), poor in lubrication function giving effect and compatibility with wax. And, the wax is poor in lubrication function giving effect.

Table 3

| | Sample | Static friction coefficient | Dynamic friction coefficient | Compatibility with wax | Remarks |
|---|---|---|---|---|---|
| | High quality paper | 0.59 | 0.52 | — | — |
| Example 3 | A | 0.17 | 0.13 | ○ | Solid modified silicone used |
| Example 3 | B | 0.28 | 0.22 | ○ | Solid modified silicone+wax used |
| Comparison Example 3 | C | 0.40 | 0.38 | ○ | Wax used |
| Comparison Example 3 | D | 0.29 | 0.20 | × | Silicone oil used |
| Comparison Example 4 | E | 0.25 | 0.17 | △ | Liquid modified silicone used (C16·α-olefin used) |

Static (Dynamic) friction coefficient:

Friction coefficient between application surfaces of high quality paper felt-side surfaces to which each sample was applied was measured. The measuring conditions were under a presure of 1.67 Kgf/cm$^2$ and at a drawing speed of 30 mm/min.

Compatibility to wax:

"Paraffin wax 140" (manufactured by Nippon Seiro K.K., m.p.: 61°C) was used, and compatibility was evaluated by the following three ranks:

○ :     Good

△ :     Poor

× :     Bad

Example 4

47.2 parts of polymethylhydrogen siloxane (P = 350, MW = 26000), 52.8 parts of the same $\alpha$-olefin as used in Example 1, 8 parts of a 0.1 % $H_2PtCl_6$ · $6H_2O$ isopropyl alcohol solution were put into a reactor, addition reacted for 9 hours at 120°C. Further, 4 parts of a 0.1 % $H_2PtCl_6$ · $6H_2O$ isopropyl alcohol solution were added, propylene gas was blown into the reactor and reacted for 5 hours at 120 °C. When a viscosity of the reaction product reached about 10000 cps, the reaction was stopped. The reaction product was washed 3 times with acetone for purification and dried.

The obtained modified silicone compound was 47.2 % in a silicone content, 38000 in molecular weight and of milky white solid.

3 parts of the obtained modified silicone compound, 5 parts of stearic acid and 20 parts of carnauba wax were dissolved into 72 parts of mineral spirit to obtain a luster wax. This was applied to a stainless steel plate with a smooth surface, and wipe-off operability after drying, luster effect after wipe-off and water repellency were observed. The results were shown in Table 4.

By the lubrication function giving effect resulting from the addition of modified silicone compound, the wipe-off operability was surprisingly improved. In addition, water repellency was also excellent.

Comparison Example 5

A luster wax was obtained in the same manner as in Example 4, except that she modified silicone obtained in Example 4 was not used, and wipe-off operability, luster effect and water repellency were observed as in Example 4. The results are shown in Table 4.

Table 4

|  | Lubrication property Wipe-off operability | Luster after wipe-off | Water repellency |
|---|---|---|---|
| Example 4 | ◎ | ◎ | ◎ |
| Comparison Example 5 | × | ◎ | △ |

Wipe-off operability:

After applying the luster wax to a stainless steel plate and drying, wipe-off was made with towel on the application surface, and its easiness was observed.

Water repellency:

By dropping waterdrop, the repelling condition was observed.

◎ :     Extremely excellent

△ :     Poor

× :     Bad

Example 5

45.6 parts of polymethylhydrogen siloxane (P = 300, MW = 22000), 54.4 parts of an $\alpha$-olefin ("Dialen-30", manufactured by Mitsubishi Kasei Co., Ltd., MW = 450 ), 8 parts of a 0.1 % $H_2PtCl_6$ · $6H_2O$ tetrahydrofurane solution were put into a reactor, addition reacted for 8 hours at 80 °C and further reacted for 18 hours at 130 °C. When a viscosity of the reaction product reached about 10000 cps, the reaction was stopped. The reaction product was washed 3 times with acetone for purification then dried. The obtained modified silicone compound was 45.6 % in a silicone content and 32000 in molecular weight.

45 parts of the obtained modified silicone compound were melted at 90 °C, and 2 parts of sorbitane monostearate and 3 parts of polyoxyethylene stearylether as emulsifying agents were added and mixed.

Next, 50 parts of water heated at 85 - 90 °C were added to the mixture little by little while stirred. After the completion of adding the heated water, stirring was further continued and the liquid was cooled to room temperature. The obtained emulsion was good in application property and emulsion stability.

This emulsion was applied to high quality paper (52.3 g/m$^2$) surface and dried for 2 minutes at 100 °C. The application quantity was 2 g/m$^2$ in solid content.

As performance estimation of the obtained application product, a contact angle against water, waterproof property, releasing property, oil repellency, oil resistance and antistaining property were measured. The results were shown in Table 5. This application product, compared to a wax emulsion applied product and silicone oil emulsion applied product, was excellent especially in oil repellency, and in antistaining property with which water repellency and releasing property are concerned.

In addition, on the application surface the generation of cracks was not observed even one year after the start of antistaining property test. This is due to softening property which modified silicone compound has.

Example 6

40.5 parts of paraffin wax "140" (manufactured Nippon Seiro K.K.) and 4.5 parts of the modified silicone compound obtained in Example 5 were melted at 90 °C, the same quantity of the same emulsifying egent as used in Example 5 was used, water (50 parts) was added to obtain a wax mixed emulsion in the same manner as in Example 5. The obtained emulsion had good emulsification stability. This emulsion was applied to high quality paper (52.3 g/m$^2$) surface and dried for 2 minutes at 100 °C. An application quantity was 20 g/m$^2$ in solid content.

On the obtained application product, the same evaluation as in Example 5 was made. The results are shown in Table 5. This application product lowered a little in releasing property, but water repellency, waterproof property, oil repellency, oil resistance and antistaining property were approximately equal to those of the modified silicone compound emulsion as in Example 5. In addition, the generation of cracks on the application surface with the lapse of time was not observed.

Comparison Example 6

45 parts of the modified silicone compound used in Example 5 were changed to 45 parts of the Paraffin wax "140" used in Example 6, the same quantity of the same emulsifying agent used in Example 5 was used, water (50 parts) was added to obtain a wax emulsion in the same manner as in Example 5.

The obtained wax emulsion was applied to high quality paper (52.3 g/m$^2$) and dried for 2 minutes at 100 °C. An application quantity was 15 g/m$^2$ in solid content. On the obtained application product, the same evaluation as in Example 5 was made. The results are shown in Table 5.

With this application product, 3 months after the start of antistaining property test, small cracks generated on the application surface.

Comparison Example 7

As a silicone oil emulsion, SM-7025 (effective content: 33 %, manufactured by Toray-Dow Corning Silicone Co., Ltd.) composed of dimethylpolysiloxane was applied to high quality paper (52.3 g/m$^2$) surface and dried for 2 minutes at 100 °C.

On the obtained application product, the same performance evaluation as in Example 5 was made. The results are shown in Table 5. Though this application product was excellent in releasing property, oil repellency was considerably inferior to that of the modified silicone emulsion as in Example 6. In addition, as for antistaining property, dirt adhesion occurred due to stickability and lipophilic property of the silicone oil.

Table 5

| Performance | Contact angle (against water) | | | Water repellency. Waterproof property | Oil repellency. Oil resistance | Releasing property (g/25mm) | Antifouling property | Remarks |
|---|---|---|---|---|---|---|---|---|
| | $\theta$ a | $\theta$ r | $\Delta \theta$ | | | | | |
| Example 5 | 110.6 | 105.4 | 5.2 | ◎ | ◎ | 9 | ◎ | No cracks observed on application surface one year after start of antistaining test. |
| Example 6 | 111.4 | 104.3 | 7.2 | ◎ | ◎ | 15 | ◎ | No cracks observed on application surface one year after start of antistaining test. |
| Comparison Example 6 | 114.6 | 104.9 | 9.8 | ○ | △ | 23 | △ | Cracks observed on application surface 3 months after start of antistaining test. |
| Comparison Example 7 | 118.8 | 110.1 | 8.7 | ◎ | △ | 8 | △ | Cracks observed on application surface one year after start of antistaining test. |

EP 0 527 286 A1

NOTE:

(1) Contact angle

A contact angle between the application paper surface and water was measured. Measurement was made with a contact angle measuring device by Kobe University method described in "Kobunshi (High Polymer)", P.639, Vol.33 published in August in 1984.

$\theta a$ : Advancing contact angle

$\theta r$ : Receding contact angle

$\Delta \theta$ : $\theta a - \theta r$

On the surface exhibiting water repellency, $\Delta \theta$ shows exclusion property for water, and the smaller $\Delta \theta$ is, the higher water repellency is.

(2) Water repellency and waterproof property

The predetermined quantity of waterdrop was dropped from the specified height to application paper surface, and conditions of repelling waterdrop were observed.

◎ : Waterdrop is markedly repelled.

○ : Waterdrop is repelled.

△ : Waterdrop slightly widens.

✕ : Waterdrop widens.

(3) Oil repellency and oil resistance

By applying salad oil on the application paper surface, the repellency was observed.

◎ : Oil is markedly repelled.

◯ : Oil is repelled.

△ : Oil widens a little.

✕ : Oil widens.

(4) Releasing property

As a standard adhesion tape, an acrylic type adhesion kraft tape "Elm tape" (manufactured by Soken Kakoh) with 25 mm in width and 210 mm in length was used, and it was stuck to the application paper by pressing one stroke at a speed of 5 mm/sec with a rubber roller with its own weight of 4.5 kg.

Thereafter, aging was made for 20 hours at a load of 20 g/cm² in an atmosphere of 23 ℃ and 65 % RH, then measurement was carried out. The releasing force was measured by autograph tension tester at a speed of 0.3 m/min and a releasing angle of 180 ℃.

(5) Antistaining property

An application paper was applied to a suction inlet of a duct of a household ventilation fan, and a degree of stain was observed for one year.

◎ : Stain is not observed.

◯ : Stain is slightly observed.

△ : Stain is considerably observed.

✕ : Stain is remarkably observed.

As mentioned above, the solid type modified silicone compound, a component of a lubricant of the present

invention is good in compatibility with wax. Therefore, a composition providing an optimum function such as lubrication property, water repellency, waterproof property, releasing property, softening property, antistaining property, oil repellency and oil resistance can be easily realized.

The excellent performance as stated above can be given not only as a solid type, but also as a solvent system or an emulsion system.

## Claims

1. A lubricant containing a solid type modified silicone compound which is obtained by reacting an organic silicone compound having a molecular weight of not less than 12000 and having at least one hydrogen group with a hydrocarbon compound having a carbon number of not less than 24 and having at least one double bond which reacts with the hydrogen group.

2. The lubricant as claimed in Claim 1, in which the modified silicone compound is obtained by addition reacting an α-olefin having a carbon number of not less than 24 with polymethyl hydrogen siloxane and/or methylhydrogen siloxane-dimethylsiloxane copolymer.

3. The lubricant as claimed in Claim 1 or Claim 2, which further contains wax.

European Patent
Office

EUROPEAN SEARCH REPORT

Application Number

EP    92 10 2196
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-1 083 476 (GENERAL ELECTRIC COMPANY)<br>* claims 1,2 *<br>* page 2, line 72 - line 85 *<br>* page 5, line 77 - line 80 *<br>--- | 1,2 | C10M107/50<br>C10M111/04<br>C10M173/02 |
| A | DATABASE WPIL<br>Week 8850,<br>Derwent Publications Ltd., London, GB;<br>AN 88-356419 [50]<br>& JP-A-63 265 996 (NIPPON DENSO KK) 2<br>November 1988<br>* abstract *<br>--- | 1,2 | |
| A | DE-A-2 535 768 (WACKER CHEMIE)<br>* claim 1 *<br>* page 11; example 1 *<br>--- | 1,3 | |
| A | PATENT ABSTRACTS OF JAPAN<br>vol. 014, no. 485 (C-0772)23 October 1990<br>& JP-A-22 02 553 ( GOYO SHIKO ) 10 August<br>1990<br>* abstract *<br>--- | 1,2 | |
| P,A | PATENT ABSTRACTS OF JAPAN<br>vol. 016, no. 207 (C-0941)18 May 1992<br>& JP-A-40 36 374 ( GOYO PAPER WORKING ) 6<br>February 1992<br>* abstract *<br>--- | 1-3 | TECHNICAL FIELDS SEARCHED (Int. Cl.5)<br><br>C10M<br>C08G |
| A | US-A-3 450 736 (F.G.A DE MONTEREY)<br>* column 1, line 59 - column 2, line 39 *<br>* column 3, line 70 - line 74 *<br>--- | 1,2 | |
| A | DE-A-1 806 445 (IMPERIAL CHEMICAL<br>INDUSTRIES)<br>* page 4, line 10 - page 5, line 8 *<br>---<br>-/-- | 1,2 | |

The present search report has been drawn up for all claims

| Place of search | Date of completion of the search | Examiner |
|---|---|---|
| THE HAGUE | 30 NOVEMBER 1992 | HILGENGA K.J. |

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-1 041 870 (DOW CORNING CORPORATION) <br> * page 2, line 65 - line 70 * <br> * page 2, line 75 - line 80 * | 1,2 | |
| | ----- | | |
| | | | **TECHNICAL FIELDS SEARCHED (Int. Cl.5)** |

The present search report has been drawn up for all claims

| Place of search | Date of completion of the search | Examiner |
|---|---|---|
| THE HAGUE | 30 NOVEMBER 1992 | HILGENGA K.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)